# EUROPÄISCHE PATENTSCHRIFT

(11) **EP 0 969 271 B1**
(45) Veröffentlichungstag und Bekanntmachung des Hinweises auf die Patenterteilung: **17.10.2001**
(21) Anmeldenummer: 98112375.5
(22) Anmeldetag: 04.07.1998
(51) Int. Cl.: G01G 19/10, G01G 23/48, G01G 23/01

(54) **Wägen von hydraulisch bewegten Bauteilen mit erneuter Kalibrierung bei erhöhter Öltemperatur**
Weighing of hydraulically movable components with new calibration according to raised oil temperature
Pesage d' éléments dans un mouvement hydraulique avec recalibrage lorsque la temperature de l'huile est elevée

(43) Veröffentlichungstag der Anmeldung: 05.01.2000
(73) Patentinhaber: Pfreundt GmbH & Co. KG, 46354 Südlohn (DE)
(72) Erfinder: Wissing, Ludger, 48712 Gescher (DE)
(74) Vertreter: Habbel, Ludwig (Lutz), Dipl.-Ing.

(56) Entgegenhaltungen:
- WO-A-96/16383
- DE-A- 3 639 521
- DE-C- 19 534 058
- SU-A- 580 460
- US-A- 5 058 422
- US-A- 5 666 295

## Beschreibung

Die Erfindung betrifft ein Verfahren zum Wiegen von hydraulisch bewegten Bauteilen, die zum Anheben von Nutzlasten dienen. Ein derartiges Verfahren ist aus der internationalen Patentanmeldung WO 96/16383 bekannt.

Gattungsfremde Verfahren, die das Gebiet hochauflösender Präzisionswaagen wie z. B. Laborwaagen betreffen, sind aus den DE 36 39 521 A1 und DE 195 34 058 C1 bekannt. Dabei wird die Umgebungstemperatur ermittelt und bei Verlassen eines zulässigen Temperaturbereichs eine erneute Kalibrierung der Waage mittels eines eingebauten Kalibriergewichtes vorgenommen, da andernfalls die Skalierung der Waage temperaturabhängig unzulässig verändert wird

Das gattungsgemäße Verfahren betrifft demgegenüber den Bereich von Baumaschinen, Last- und Schwerlastfahrzeugen und dergl., wo die Nutzlast in hydraulisch anhebbaren Bauteilen gehandhabt wird und mehrere Tonnen wiegen kann. Das gattungsgemäße Verfahren dient der Überwachung der Einhaltung bestimmter Grenzwerte, so daß oberhalb eines maximal zulässigen im Hydraulikfluid erreichten Temperatumiveaus keine gültige Messung möglich ist. Das Verfahren ist auch auf ein vorgegebenes unteres Temperaturniveau anwendbar.

Es ist aus der Praxis bekannt, daß die Bestimmung der Nutzlast, beispielsweise des Schaufelinhaltes bei einem Schaufellader oder des Muldeninhaltes bei einem Muldenkipper, mit Hilfe der Ermittlung des hydraulischen Druckes erfolgen kann, der beispielsweise in den Hubzylindern gemessen wird, mit denen die Schaufel bzw. die Mulde angehoben wird. Zur Erzielung optimaler Wiegeergebnisse ist vorteilhaft eine regelmäßige Kalibrierung des Wiegesystemes erforderlich, d. h. der Wiege-Nullpunkt bei leerer Schaufel oder Mulde wird neu festgelegt.

Bei Arbeitsgeräten, die nicht kontinuierlich im Dreischichtbetrieb genutzt werden, sondern die beispielsweise über Nacht stillstehen, können erhebliche Temperaturdifferenzen im Hydraulikfluid auftreten, die zu veränderten Meßergebnissen führen. Insbesondere kann sich aufgrund der unterschiedlichen Fluidtemperaturen der Nullpunkt verschieben.

Es ist daher aus der Praxis bekannt, bei einem Schaufellader die Schaufel vor Arbeitsbeginn mehrere Male leer anzuheben und abzusenken, so daß sich durch diese Bewegungen das Hydraulikfluid auf eine Temperatur erwärmt, die etwa der Temperatur entspricht, die später während des gesamten Arbeitsbetriebes des Schaufelladers im Hyrauliksystem erreicht wird, um durch diese Vorwärmung korrekte Wiegeergebnisse zu erhalten. Auch wenn nach längeren Pausen oder Stillstandszeiten innerhalb des Arbeitstages das Fahrzeug wieder in Betrieb genommen wird, insbesondere die Schaufel bzw. die Mulde wieder bewegt wird, so ist vorsichtshalber eine erneute Vorwärmung erforderlich, um sicherzustellen, daß der Nullpunkt für die nachfolgend durchgeführte Wiegung korrekt ist und dementsprechend korrekte Wiegeergebnisse angezeigt werden.

Bei diesem Verfahren ist nachteilig, daß die Belastung der Fahrzeuge erheblich ist, insbesondere wenn auf diese Weise Fahrzeuge vorgewärmt werden, deren Hydrauliksystem nicht für ein mehrfaches unmittelbar aufeinanderfolgendes Anheben und Absenken ausgelegt ist. Zudem ist das Verfahren umständlich und erfordert einen erheblichen Zeitaufwand, so daß der Fahrzeugführer geneigt sein könnte, auf die Vorwärmung zu verzichten.

Der Erfindung liegt die Aufgabe zugrunde, ein gattungsgemäßes Verfahren dahingehend zu verbessern, daß dieses mit möglichst wenig Leerbewegungen der hydraulisch bewegten Bauteile die Anzeige korrekter Wiegeergebnisse ermöglicht.

Diese der Erfindung zugrundeliegende Aufgabe wird durch ein Verfahren mit den Verfahrensschritten des Anspruches 1 gelöst.

Die Erfindung schlägt mit anderen Worten vor, eine erneute Nullung des Systems nur dann zu fordern und die Verwertung der Wiegung in Form einer Anzeige oder eines Abspeicherns des Wiegeergebnisses nur dann zu unterdrücken, wenn nicht ein fixierter Grenzwert, sondern eine bestimmte Temperaturdifferenz überschritten worden ist zwischen der Temperatur des Hydraulikfluides, die der Nullpunktsbestimmung zugrundegelegen hat - und die daher der momentanen Wiegung zugrundeliegt - und der momentan im Hydraulikfluid vorliegenden Temperatur.

Als Bezugsgröße wird die Temperatur des Hydraulikfluides herangezogen, die nach einer Nullung des Wiegesystemes ermittelt wurde. Nachfolgende Nullungen führen daher ggf. zu unterschiedlichen derartigen Bezugsgrößen. Auf diese Weise ist es praxisgerecht möglich, je nach Außentemperatur und je nach Arbeits- und Betriebsbedingungen des Fahrzeuges typische Temperaturwerte zu erhalten, die als Bezugsgröße dienen, wobei die Temperaturdifferenz durch einen Vergleich zwischen dieser Bezugsgröße und der momentan im Hydrauliksystem ermittelten Temperatur berechnet wird.

Messungen außerhalb des Temperaturbereichs, der im hydraulischen System während einer kontinuierlichen Arbeit herrscht, können daher zulässig sein, beispielsweise in der Aufwärmphase bei Arbeitsbeginn. Die nach dem gattungsgemäßen Verfahren festgelegten Temperaturgrenzwerte hingegen legen diesen während einer kontinuierlichen Arbeit üblicherweise eingehaltenen Temperaturbereich zugrunde und erfordern bei dessen Unterschreitung eine Anwärmung des hydraulischen Systems; sie bedingen daher die Leerhübe, die die Lebensdauer des Gerätes verringern und auch durch ihren Zeitbedarf unwirtschaftlich sind.

Fällt beispielsweise aufgrund einer längeren Fahrtstrecke, bei der die Schaufel oder die Mulde des Fahrzeuges nicht bewegt wird, die Temperatur in dem Hydrauliksystem, welches die Schaufel oder die Mulde beaufschlagt, geringfügig ab, so ist nicht notwendigerweise aus Sicherheitsgründen die vorgegebene Anzahl von Leerhüben erforderlich, ebenso wie beispielsweise nach einer Mittagspause oder einer ähnlichen Arbeitsunterbrechung, während der das hydraulisch bewegte Bauteil unbewegt blieb. Vielmehr wird lediglich bedarfsweise eine erneute Nullung oder soviel Bewegung des hydraulisch bewegten Bauteiles erfordert, beispielsweise in Form von Leerhüben, wie zur Einhaltung der maximal zulässigen Temperaturdifferenz erforderlich ist. Auf diese Weise wird die Anzahl der notwendigen Leerhübe reduziert, die nutzbare Zeit für das gesamte Fahrzeug vergrößert und die Belastung der einzelnen Komponenten verringert.

Vorteilhaft kann, wenn die Temperaturdifferenz zu groß wird, eine optische oder akustische Anzeige aktiviert werden, so daß der Fahrzeugführer vor einem erneuten Beladen des Fahrzeuges die Vorwärmung des Hydraulikfluides in dem erforderlichen Maß oder eine erneute Nullung vornehmen kann, so daß nicht etwa bei bereits gefüllter Schaufel oder gefüllter Mulde der Benutzer erkennen muß, daß keine gültige Wiegung zustande kommen wird.

Vorteilhaft kann die maximale Temperaturdifferenz 10° C betragen. Bei einer derartigen maximal zulässigen Temperaturdifferenz ergeben sich keine gravierenden Nullpunktsverschiebungen, so daß ausreichend genaue Wiegeergebnisse angezeigt werden. Gleichzeitig ist diese Temperaturdifferenz so großzügig bemessen, daß kürzere Stillstandszeiten oder ähnliche Pausen des hydraulisch bewegten Bauteiles nicht stets eine erneute Nullung oder eine Vorwärmung der Hydraulik erfordern. Abweichend von der genannten Temperaturdifferenz von 10° C können andere Temperaturdifferenzen gewählt werden, da die wirksamen Hubzylinderflächen der verwendeten hydraulischen Anlage den Wert der Temeraturdifferenz bestimmen, die nicht überschritten werden sollte.

Vorteilhaft kann die Temperatur des Hydraulikfluides ständig gemessen werden und nicht nur unmittelbar vor der Einleitung einer Wiegung. Durch diese ständige Temperaturmessung kann eine frühzeitige Anzeige erfolgen, die die Überschreitung der zulässigen Temperaturdifferenz anzeigt, so daß durch die Messung vermieden werden kann, daß der Nutzlastinhalt des Fahrzeuges wieder abgeladen werden muß und erst eine erneute Nullung durchgeführt werden muß, bevor diese Materialmenge korrekt verwogen werden kann.

Unabhängig von der einzuhaltenden maximalen Temperaturdifferenz kann auch eine vorbestimmte Maximaltemperatur vorgesehen sein, die nicht überschritten werden darf. Aus der Praxis sind beispielsweise Absetzkipperfahrzeuge bekannt, aber auch andere Fahrzeuge mit vergleichsweise kleinen Hubzylindern, bei denen in Folge häufiger unmittelbar hintereinanderfolgender Hubbewegungen die Temperaturen des Hydrauliköles so stark ansteigen, daß keine korrekten Messungen mehr möglich sind. Gerät das Hydrauliköl in diesen unzulässig hohen Temperaturbereich, so sollte sinnvollerweise die Wiegung nicht mehr durchgeführt bzw. nicht angezeigt oder abgespeichert werden, da das Wiegeergebnis nicht korrekt ermittelt werden kann. Stattdessen kann vorteilhaft eine Anzeige geschaltet werden, die in Form einer akustischen Meldung oder einer optischen Warnlampe ausgestaltet sein kann oder die bei einem ohnehin im Fahrzeug vorhandenen alphanumerischen Display eine Meldung, wie beispielsweise "Temperaturbereich überschritten" oder "Hydrauliköl abkühlen lassen" ausgestaltet sein kann.

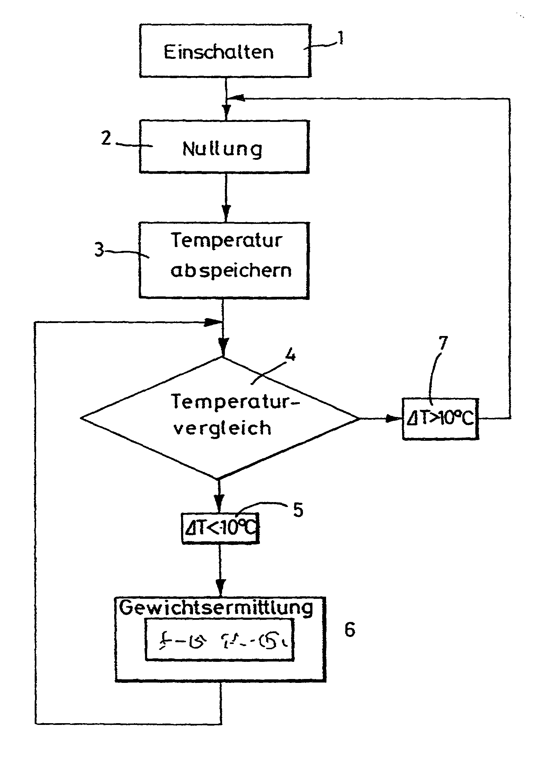

Anhand der schematischen Zeichnung wird das erfindungsgemäße Verfahren im folgenden näher erläutert, wobei die Zeichnung schematisch das Arbeitsverfahren eines Wiegesystemes darstellt, mit dem die korrekte Gewichtsermittlung und insbesondere die korrekte Nullpunktslage des Wiegesystemes überwacht wird. In der Zeichnung sind von oben nach unten fortlaufend die einzelnen Verfahrensschritte dargestellt:

Die Waage wird, wie bei 1 schematisch angedeutet, zunächst eingeschaltet. Anschließend wird das hydraulisch bewegliche Bauteil bewegt und dabei gerät es in seine Meßposition, wo es ggf. für die Wiegung angehalten werden muß oder wobei die Messung während der kontinuierlichen Bewegung des hydraulisch bewegten Bauteiles erfolgen kann, während es seine Meßposition durchläuft. Das Bauteil wird zunächst ohne Nutzlast bewegt, so daß das Meßsignal gewichtsmäßig lediglich durch das Eigengewicht des hydraulisch bewegten Bauteiles beeinflußt wird. Auf diese Weise kann eine Nullung des Wiegesystems, wie bei 2 angedeutet, erfolgen. Die Hydraulikflüssigkeit, die zur Bewegung des hydraulisch bewegten Bauteiles dient, also beispielsweise die im Hubzylinder einer Mulde oder einer Schaufel befindliche Hydraulikflüssigkeit, weist bei dieser Nullung eine Temperatur auf, die anschließend gespeichert wird, wie bei 3 angedeutet ist.

Die Temperatur des Hydraulikfluides wird jedoch nicht nur während der Nullung gemessen, sondern kontinuierlich. Der momentane Temperaturwert wird dabei ständig mit dem nach der Nullung abgespeicherten Temperaturwert verglichen, wobei dieser Vergleich, wie bei 4 angedeutet, zu einer Verzweigung hinsichtlich der weiteren Verfahrensweise führt:

Ist die Temperaturdifferenz kleiner als 10° C, wie bei 5 angedeutet, so wird der Wiegevorgang fortgeführt und es kommt zu einer bei 6 angedeuteten Gewichtsermittlung, sobald sich das hydraulisch bewegte Bauteil in seiner Wiegeposition befindet. Das ermittelte Gewicht kann für den Benutzer des Fahrzeuges angezeigt werden oder zur Erfassung eines Gesamtgewichtes abgespeichert oder von einem vorgegebenen Grenzgewichtswert abgezogen werden oder auf ähnliche Weise weiterverarbeitet werden.

Im Anschluß an die vorgenommene Wiegung erfolgt ein erneuter Vergleich zwischen der momentanen Temperatur des Hydraulikfluides und der nach der Nullung abgespeicherten Temperatur, so daß wieder entsprechend dem Verzweigungsfeld bei 4 die Entscheidung in Abhängigkeit von der ermittelten Temperaturdifferenz getroffen wird, ob eine erneute Wiegung durchgeführt und ausgewertet wird oder ob eine derartige weitere Wiegung unzulässig ist. In diesem bei 7 angedeuteten Fall einer Temperaturdifferenz von mehr als 10° C muß eine erneute Nullsetzung des Wiegesystems erfolgen, d. h. das hydraulisch bewegbare Bauteil muß leer in die Wiegeposition gebracht werden und eine erneute Nullsetzung mit entsprechend neuer Abspeicherung des dabei ermittelten Temperaturwertes der Hydraulikflüssigkeit muß erfolgen. Der Verfahrensablauf ab dem bei 2 dargestellten Schritt der Nullung wird also erneut durchlaufen.

Ergänzend zu dem in der Zeichnung dargestellten Verfahrensablauf kann vorteilhaft vorgesehen sein, daß das Ergebnis der bei 4 angedeuteten Temperaturdifferenzermittlung angezeigt wird. Dies kann in quantitativer, z.B. numerischer Anzeige der Temperaturdifferenz erfolgen, so daß der Benutzer beispielsweise bei Beginn der Arbeitszeit eine zunehmende Erwärmung der Hydraulikflüssigkeit mit verfolgen kann und rechtzeitig vor dem erneuten Beladen seines Fahrzeuges eine erneute Nullung durchführen kann.

Alternativ kann jedoch vorgesehen sein, eine einfache qualitative Anzeige vorzusehen, die entweder aus- oder eingeschaltet ist in Abhängigkeit davon, ob die Temperaturdifferenz das zulässige Maß einhält oder nicht. Da die Zeitspanne zwischen dem Befüllen des beweglichen Bauteiles und dessen Verwiegung vergleichsweise kurz ist im Vergleich zur übrigen Zeit eines Arbeitszyklus bis zum erneuten Beladen dieses Bauteiles, ist die Wahrscheinlichkeit sehr groß, daß ein Überschreiten der zulässigen Temperaturdifferenz während dieser übrigen Zeit eines Arbeitszyklus erfolgt, so daß auch im Fall einer lediglich qualitativen Anzeige eine Nullung durchgeführt werden kann, bevor das hydraulisch bewegbare Bauteil erneut mit einer Nutzlast befüllt wird.

## Patentansprüche

1. Verfahren zum Wiegen von hydraulisch bewegten Bauteilen, die zum Anheben von Nutzlasten dienen,
a) wobei der bei der Bewegung des Bauteiles herrschende Druck der Hydraulikflüssigkeit ermittelt wird,
b) und wobei das Ergebnis dieser Druckmessung zur Berechnung des Gewichtes des Bauteiles herangezogen wird,
c) und wobei vor der eigentlichen Gewichtsbestimmung des mit einer Nutzlast belasteten Bauteiles eine Kalibrierung oder Nullpunktbestimmung durchgeführt wird, bei der das Bauteil ohne zusätzliche Nutzlast gewogen wird,
d) und wobei die Temperatur des Hydraulikfluides während der Kalibrierung oder Nullpunktbestimmung ermittelt wird, und
e) anschließend die Temperatur des Hydraulikfluides, die dieses unmittelbar nach einer Nullpunktbestimmung aufweist, als Temperaturwert gespeichert wird, mit dem anschließend die aktuelle, jeweils gemessene Tempera tur des Hydraulikfluides zur Bestimmung einer Temperaturdifferenz verglichen wird, und
f) das Anzeigen und/oder Abspeichern des Wiegeergebnisses unterdrückt wird, wenn die Temperaturdifferenz einen vorgegebenen Wert überschreitet, und
g) bei Überschreiten der maximal zulässigen Temperaturdifferenz eine erneute Kalibrierung oder Nullpunktbestimmung durchgeführt wird und die Schritte e) und f) unter Zugrundelegung des neuen Nullpunkt-Wertes wiederholt werden.

2. Verfahren nach Anspruch 1, wobei bei Überschreiten der Temperaturdifferenz eine akustische und/oder optische Anzeige aktiviert wird.

3. Verfahren nach Anspruch 1 oder 2, wobei die zulässige Temperaturdifferenz höchstens 10° C betragen darf.

4. Verfahren nach einem der vorhergehenden Ansprüche, wobei die Temperatur des Hydraulikfluides ständig gemessen wird.

5. Verfahren nach einem der vorhergehenden Ansprüche, wobei bei Überschreiten einer vorgegebenen Temperatur des Hydraulikfluides das Anzeigen und/oder Abspeichern des Wiegeergebnisses unterdrückt wird.

6. Verfahren nach Anspruch 5, wobei eine Anzeige aktiviert wird, die auf die Überschreitung der zulässigen Höchsttemperatur hinweist.

## Claims

1. Method for weighing hydraulically movable components that are used for lifting pay loads,
a) wherein the pressure of the hydraulic fluid prevailing upon movement of the component is ascertained,
b) and wherein the result of this pressure measurement is used for calculating the weight of the component,
c) and wherein calibration or zero point determination is carried out in which the component is weighed without additional pay load, prior to the actual weight determination of the component when loaded with the pay load,
d) and wherein the temperature of the hydraulic fluid is ascertained during the calibration or zero point determination, and,
e) then, the temperature of the hydraulic fluid shown thereby immediately after a zero point determination is stored as a temperature value with which the actual from time to time measured temperature of the hydraulic fluid is then compared to determine a temperature difference, and,
f) the indication and/or storing of the weighing result is suppressed when the temperature difference exceeds a given value, and,
g) upon the maximum permissible temperature difference being exceeded a renewed calibration or zero point determination is carried out and steps e) and f) are repeated. based on the new zero point value.

2. Method according to claim 1, wherein an audible and/or visual indication is actuated upon the temperature difference being exceeded.

3. Method according to claim 1 or 2, wherein the permissible temperature difference is allowed to amount, at most, to 10°C.

4. Method according to one of the preceding claims, wherein the temperature of the hydraulic fluid is measured continuously.

5. Method according to one of the preceding claims, wherein, when a given temperature of the hydraulic fluid is exceeded, indication and/or storing of the weighing result is suppressed.

6. Method according to claim 5, wherein an indication is actuated which points to the permissible maximum temperature being exceeded.

## Revendications

1. Procédé de pesage d'éléments à déplacement hydraulique, qui servent à soulever des charges utiles, procédé dans lequel
a) la pression du fluide hydraulique, régnant lors du mouvement de l'élément, est déterminée,
b) et dans lequel le résultat de cette mesure de la pression est exploité pour le calcul du poids de l'élément,
c) et dans lequel, avant la détermination proprement dite du poids de l'élément sollicité par une charge utile, un calibrage ou une détermination du point zéro est effectué, opération pour laquelle l'élément est pesé sans charge utile supplémentaire,
d) et dans lequel la température du fluide hydraulique est déterminée pendant le calibrage ou la détermination du point zéro, et
e) ensuite la température du fluide hydraulique, que présente celui-ci immédiatement après une détermination du point zéro, est enregistrée en mémoire en tant que valeur de température à laquelle est ensuite comparée la température actuelle, chaque fois mesurée, du fluide hydraulique afin de déterminer une différence de température, et
f) l'indication et/ou la conservation en mémoire du résultat de la pesée est ou sont supprimée(s), lorsque la différence de température dépasse une valeur prédéfinie, et
g) lors du dépassement de la différence maximale admissible de température, une nouvelle opération de calibrage ou de détermination du point zéro est effectuée, et les étapes e) et
f) sont répétées à partir de la nouvelle valeur au point zéro.

2. Procédé selon la revendication 1, dans lequel, lors du dépassement de la différence de température, une indication acoustique et/ou optique est ou sont mise(s) en fonction.

3. Procédé selon la revendication 1 ou 2, dans lequel la différence admissible de température est au maximum de 10 °C.

4. Procédé selon l'une des revendications précédentes, dans lequel la température du fluide hydraulique est mesurée en permanence.

5. Procédé selon l'une des revendications précédentes, dans lequel, lors d'un dépassement d'une température prédéfinie du fluide hydraulique, l'indication et/ou la conservation en mémoire du résultat de la pesée est ou sont supprimée(s).

6. Procédé selon la revendication 5, dans lequel une indication est mise en fonction afin de signaler le dépassement de la température maximale admissible.
